Europäisches Patentamt

European Patent Office

Office européen des brevets

(19)

(11) Veröffentlichungsnummer : **0 148 430**
**B1**

(12) **EUROPÄISCHE PATENTSCHRIFT**

(45) Veröffentlichungstag der Patentschrift :
07.03.90

(51) Int. Cl.$^5$ : **B 09 B   1/00**

(21) Anmeldenummer : 84114996.6

(22) Anmeldetag : 08.12.84

(54) Verfahren zur Herstellung eines wasserundurchlässigen Behälters für Deponien.

(30) Priorität : 29.12.83 DE 3347377

(43) Veröffentlichungstag der Anmeldung :
17.07.85 Patentblatt 85/29

(45) Bekanntmachung des Hinweises auf die Patenterteilung : 07.03.90 Patentblatt 90/10

(84) Benannte Vertragsstaaten :
AT BE DE GB IT NL SE

(56) Entgegenhaltungen :
EP--A-- 0 050 371
EP--A-- 0 060 902
DE--A-- 2 917 379
DE--A-- 3 012 706
DE--B-- 2 426 641
BRAUNKOHLE, Jahrgang 1981, Heft 2, Februar 1981, Düsseldorf, G.HEIDE, H.WERNER "Verfahren zur schadlosen Deponierung von sulfathaltigen Kraftwerksaschen im rheinischen Braunkohlenrevier" Seiten 7-11 *Kapitel 4, 2.-4. Absatz; Tabelle 1; Kapitel 5; Kapitel 7, 3.-5. Absatz*

(73) Patentinhaber : **Gebr. Knauf Westdeutsche Gipswerke KG**
**Postfach 10**
**D-8715 Iphofen (DE)**

(72) Erfinder : **Lukas, Walter, Dr.**
**Lanserstrasse 15a**
**A-6071 Aldrans/Innsbruck (AT)**
Erfinder : **Wirsching, Franz, Dr.**
**In den Weinbergen 7**
**D-8715 Iphofen (DE)**

(74) Vertreter : **Werner, Hans-Karsten, Dr. et al**
**Deichmannhaus am Hauptbahnhof**
**D-5000 Köln 1 (DE)**

EP 0 148 430 B1

**Beschreibung**

Gegenstand der vorliegenden Erfindung ist ein Verfahren zur Herstellung eines wasserundurchlässigen Behälters für Deponien durch Einbringen einer wasserundurchlässigen Schicht in eine vorbereitete Geländeformation.

Eine Reihe von zu deponierenden und auch deponierfähigen Materialien weisen den Nachteil auf, daß sie zumindest bei längeren Witterungseinflüssen zu Verunreinigungen des Grundwassers führen und außerdem durch nachhaltige Auswaschungen auch ihre mechanischen Eigenschaften verändern. So können Produkte mit einem hohen Gehalt and Gips gefährdet sein, durch intensive Auswaschungen nicht zur das Grundwasser mit Sulfat zu verunreinigen, sondern auch ihre mechanische Widerstandsfähigkeit zu verlieren. Weitere deponiefähige Substanzen sind Flugaschen und Schlämme aus Kohlekraftwerken und der Rauchgasreinigung, auch wenn sie einen hohen Gehalt an Schwermetallen enthalten. Es ist daher erforderlich, diese Materialien nur in Deponien einzubringen, die eine Wanne mit einer wasserundurchlässigen Schicht aufweisen. Weiterhin kann es erwünscht sein, den wannenförmigen Behälter nach vollständiger Befüllung auch nach oben abzudichten. Nach dem bisherigen Wissenstand kommt für eine Abdichtung nur bindiges Material (Ton oder lehmiger Ton) in Betracht, das in entsprechender Stärke lagenweise feucht eingebracht und verdichtet werden muß. Eine weitere Möglichkeit zu Abdichtung wäre prinzipiell die Verwendung von verschweißten Kunststoff-Folien. Dies ist aber nicht nur mit sehr hohen Kosten verbunden, sondern birgt die Gefahr, daß die Kunststoff-Folie durch entsprechende Beanspruchung und nach Alterung reißt und dann doch Bestandteile der deponierten Produkte in das Grundwasser gelangen ; vgl. Braunkohle Heft 2, Februar 1981 S. 7-11.

In diesem Artikel ist weiterhin beschrieben, daß diese sulfathaltigen Braunkohleaschen sich bei Wasserzusatz innerhalb kurzer Zeit verfestigen. Diese Verfestigung beruht auf mehreren Reaktionen, nämlich der Abbindung von Calciumsulfatanhydrid zu Calciumsulfatdihydrat, Umwandlung von Calciumoxid in Calciumhydroxid und spätere Umwandlung in Calciumcarbonat sowie Zersetzung von Calciumferrit in Calciumhydroxid und Eisen-III-Oxid. Diese Braunkohlenaschen enthalten im allgemeinen Mengen an Calciumoxid, die deutlich unter 1 % liegen. Calciumoxid kann in diesen Aschen nur aus Calciumcarbonat entstehen und nur dann in dieser Form in der Flugasche verbleiben, wenn keine hochsiedenden sauren Komponenten vorhanden sind. In der Regel ist das Calcium in Flugaschen aus Kohlekraftwerken in erheblichem Umfang in Form von Calciumaluminaten und -silikaten gebunden. Selbst Eisenoxide sind in der Lage mit Calciumoxid salzartige Verbindungen einzugehen. Tatsächlich ist in den Flugaschen Calcium nur in minimalen Mengen vorhanden ; darüber hinaus wird der Gehalt an freiem Calciumoxid durch weitere Reaktionen vermindert. Weiterhin ist bei der Verbrennung von Braunkohle zu beachten, daß dies bei so niedrigen Temperaturen geschieht und die Verweilzeiten so kurz sind, daß selbst vorhandenes Calciumcarbonat noch nicht in Calciumoxid umgewandelt wird. Aus den in Laborversuchen ermittelten Durchlässigkeitswerten geht hervor, daß nur in wenigen Fällen und ausnahmsweise Durchlässigkeitswerte von $10^{-8}$ bis $10^{-9}$ erreicht wurden. Von entscheidender Bedeutung sind aber vor allem die Werte für die Druckfestigkeit, die beim Anfeuchten von reiner Flugasche viel zu niedrig bleiben. Nach dem Stand der Technik erhält man somit Deponate, die in geringerem Maße auslaugbar sind als die bis dahin trocken deponierte Flugasche.

Die Erfindung hat sich die Aufgabe gestellt, ein Verfahren zur Herstellung eines wasserundurchlässigen Behälters für Deponien durch Einbringen einer wasserundurchlässigen Schicht in eine vorbereitete Geländeformation zu entwickeln, welches einfach, preiswert und sicher zu dem gewunschten Erfolg führt.

Diese Aufgabe kann überraschenderweise dadurch gelöst werden, daß Flugasche aus Kohlekraftwerken mit einem Gehalt an alkalischem Anreger von mindestens 3 Gew.-%, mit wasser zu einem erdfeuchen Material vermischt und nach Proctorverdichtung in einer Stärke von mindestens 0,3 m aufgetragen wird. Als alkalische Anreger kommen insbesondere Portlandzement, Calciumhydroxid, Calciumoxid oder Gemische derselben in Frage. Als Flugaschen kommen prinzipiell alle üblichen Flugaschen aus Kohlekraftwerken in Frage, da diese überraschenderweise alle mit den alkalischen Anregern zu ausreichend stabilen und wasserundurchlässigen Materialien abbinden, die als wasserundurchlässige Wannen bzw. Behälter für Deponien geeignet sind. Teilweise enthalten Flugaschen schon gewisse Mengen alkalischer Anreger.

Eine besonders einfache und preiswerte Ausführungsform des erfindungsgemäßen Verfahrens besteht darin, ein trockenes, pulverförmiges Flugaschederivat aus calciumoxidhaltigen Flugaschen mit einem Gehalt von mindestens 4 Gew.-% Calciumhydroxid zu verwenden. Ein derartiges trockenes, pulverförmiges Flugaschederivat ist beispielsweise erhältlich, indem man calciumhydroxidhaltige Flugaschen mit einem Gehalt von mindestens 3 Gew.-% freiem Calciumoxid mit überschüssigen Mengen Wasser umsetzt, wobei die überschüssige, nicht zur Ablöschung benötigte Wassermenge so bemessen ist, daß sie durch die Reaktionswärme der Ablöschung vollständig verdampft und abgeführt wird. Dieses Verfahren ist ausführlich in der deutschen Patentanmeldung DE-A-33 47 375.7 (« Verfahren und Vorrichtung zur Herstellung eines Flugaschederivats und seine Verwendungen ») = EP-A-0 135 147 beschrieben. Flugaschen mit einem Calciumoxidgehalt von mindestens 3 Gew.-% freiem Calciumoxid entstehen insbesondere bei der trockenen Entschwefelung von Rauchgasen nach dem Trocken-Additiv-Verfahren.

Derartige calciumoxidhaltige Flugaschen sind sehr aggressiv und bereiten erhebliche Probleme bei der weiteren Verarbeitung. Sofern sie jedoch nach dem oben erwähnten Verfahren in eine trockenes, pulverförmiges Flugaschederivat umgewandelt worden sind, können sie in hervorragender Weise ohne weitere Zusätze mit Wasser vermischt zur Herstellung einer wasserundurchlässigen Wanne bzw. Behälters für Deponien verwendet werden. Selbstverständlich kann aus diesem Material nach der Befüllung der Deponie eine wasserundurchlässige Deckschicht hergestellt werden, so daß die Wanne schließlich als geschlossener Behälter vorliegt. Selbstverständlich können aber auch Flugaschen mit einem Gehalt von mindestens 1 Gew.-% Calciumoxid, gegebenenfalls unter Zusatz von Portlandzement, Calciumhydroxid und/oder Calciumoxid, unmittelbar mit Wasser vermischt und erfindungsgemäß verwendet werden, wobei jedoch der Gesamtgehalt an Calciumoxid und/oder anderen alkalischen Anregern mindestens 3 Gew.-% betragen muß.

Der Wassergehalt richtet sich nach der Feinheit der Komponente und schwankt von 15 bis 45 Gew.-% (Wasser/Feststoffgehalt W/F = 0,15 bis 0,45). Flugasche kann Feinheiten zwischen 2 500 bis 5 000 $cm^2/g$ nach Blaine aufweisen (Feinheit nach Absscheidungsart).

Als Bindemittel kann zusätzlich Zement zugegeben werden, und zwar in Mengen zwischen 3 bis 8 %. Der Bindemittelanteil beträgt somit im allgemeinen 3 bis 8 % und kann jedoch bei Verwendung von des trockenen, pulverförmigen Flugaschederivats aus calciumoxidhaltigen Flugaschen bis zu 35 % betragen. Den Gemischen können auf Wunsch auch körnige Komponenten wie Sand oder Schlacke beigemischt werden. Weiterhin ist es prinzipiell möglich, zur Verbesserung der rheologischen Eigenschaften sowie der Gebrauchseigenschaften Dichtungsmittel wie Bentonit oder Tonmineralien in Mengen bis 10 % einzumischen. Weiterhin lassen sich die rheologischen Verarbeitungseigenschaften gewünschtenfalls verbessern durch Zusatz von 0,1 bis 1,5 Gew.-% Fließmitteln. Als Fließmittel kommen insbesondere modifizierte Melaminharze, Ligninsulfate und Naphtalinsulfonate in Frage.

Das erfindungsgemäße Verfahren ist in den nachfolgenden Beispielen näher erläutert.

## Beispiel 1

Trockenes, pulverförmiges Flugaschederivat, welches erhalten wurde durch Ablöschen einer einer Flugasche mit einer Gehalt an freiem Calciumoxid von ca. 20 %, die aus einem im Trocken-Additiv-Verfahren befeuerten Braunkohle-Kessel stammt, wird mit Wasser im Verhältnis 1 : 0,15 umgesetzt und unmittelbar nach dem Ablöschen mit weiterem Wasser im Verhältnis 1 : 0,25 vermischt. Das erdfeuchte Material wird in die vorbereichtete Geländeformation gebracht und dort in einer Schichtdicke von 0,5 bis 1 m aufgetragen. Das Material der so erhaltenen Wanne hat folgende Eigenschaften :

| | |
|---|---|
| Raumgewicht | 1,7 $kp/dm^3$ ; |
| 7-Tage-Druckfestigkeit | 3,5 $MN/m^2$ ; |
| 28-Tage-Druckfestigkeit | 11,5 $MN/m^2$ ; |
| 56-Tage-Durchlässigkeitsbeiwert | $2 \times 10^{-9}$ m/s |

Das Material wird auch bei längerer intensiver Bewässerung nicht ausgelaugt oder mechanisch verändert. Es ist deshalb als wasserundurchlässige Wanne für eine Deponie geeignet.

(Siehe Tabelle Seite 4 ff.)

Beispiel 2

Folgende Gemische wurden nach Proktorverdichtung gelagert und ergaben bezüglich der Gebrauchseigenschaften folgende Werte :

| | 56-Tage-Durchlässigkeitsbeiwert m/sec | 28 Tage | Druckfestigkeit N/mm² | | | Elastizitäts-Modul N/mm² nach 90 Tagen |
| --- | --- | --- | --- | --- | --- | --- |
| | | | 90 T | 180 T | 360 T | |
| Mischung 1 (1% Calciumhydroxid 99% Flugasche) | $8,6 \times 10^{-9}$ | 1,8 | 2,2 | 2,4 | 2,8 | 3800 |
| Mischung 2 (5% Calciumhydroxid 95% Flugasche) | $5,6 \times 10^{-9}$ | 2,2 | 2,8 | 2,4 | 2,8 | 4200 |
| Mischung 3 (10% Calciumhydroxid 90% Flugasche) | $3,2 \times 10^{-9}$ | 2,4 | 4,3 | 4,6 | 5,4 | 4800 |

EP 0 148 430 B1

Tabelle (Fortsetzung)

| | 56-Tage-Durch-lässigkeitsbei-wert m/sec | 28 Tage | Druckfestig-keit N/mm² 90 T | | 180 T | 360 T | Elastizitäts-Modul N/mm² nach 90 Tagen |
|---|---|---|---|---|---|---|---|
| Mischung 4 (20% Calciumhydroxid 80% Flugasche) | $3,2 \times 10^{-10}$ | 4,2 | 10,5 | | 13,8 | 14,2 | 6900 |
| Mischung 5 (5% Calciumhydroxid 3% Zement 92% Flugasche) | $7 \times 10^{-9}$ | 6,8 | 10,2 | | 16,5 | 18,4 | 12500 |
| Mischung 6 (wie Mischung 2 jedoch 0,5% Fließ-mittel (modifiziertes Melaminharz) | $8,4 \times 10^{-10}$ | 3,8 | 6,4 | | 6,8 | 9,2 | 6800 |

EP 0 148 430 B1

# EP 0 148 430 B1

**Patentansprüche**

1. Verfahren zur Herstellung eines wasserundurchlässigen Behälters für Deponien durch Einbringen einer wasserundurchlässigen Schicht in eine vorbereitete Geländeformation, dadurch gekennzeichnet, daß Flugasche aus Kohlekraftwerken mit einem Gehalt an alkalischem Anreger von mindestens 3 Gew.-% mit wasser zu einem erdfeuchten 3 Gew.-% mit Wasser zu einem erdfeuchten Material vermischt und nach Proctorverdichtung in einer Stärke von mindestens 0,3 m aufgetragen wird.

2. Verfahren gemäß Anspruch 1, dadurch gekennzeichnet, daß als alkalischer Anreger Portlandzement, Calciumhydroxid, Calciumoxid oder Gemische derselben verwendet werden.

3. Verfahren gemäß Anspruch 1, dadurch gekennzeichnet, daß ein trockenes, pulverförmiges Flugaschederivat aus calciumoxidhaltigen Flugaschen mit einem Gehalt von mindestens 4 Gew.-% Calciumhydroxid verwendet wird.

4. Verfahren gemäß einem der Ansprüche 1 bis 3, dadurch gekennzeichnet, daß der Mischung Dichtungsmittel und/oder Fließmittel zugefügt werden.

**Claims**

1. A process for the production for a water-impermeable container for waste disposals by introducing a water-impermeable layer in to a prepared terrain formation, characterized in that fly ashes from coalfired power stations having a content of at least 3 % of an alkaline initiator is mixed with water to form an earth-moist material and after Proctor-densification is applied to a thickness of at least 0.3 m.

2. The process according to claim 1, characterized in that Portland cement, calcium hydroxide, calcium oxide or mixtures thereof are used as the alkaline initiator.

3. The process according to claim 1, characterized in that a dry powdery fly ashes derivative from calcium oxide-containing fly ashes having a content of at least 4 % by weight of calcium hydroxide is used.

4. The process according to anyone of claims 1 to 3, characterized in that a sealing agent and/or flux material is added to the mixture.

**Revendications**

1. Procédé de fabrication d'un réservoir ou réceptacle imperméable à l'eau pour des décharges par l'incorporation d'une couche imperméable à l'eau dans une formation géologique préparée, caractérisé en ce que l'on mélange des cendres volantes de centrales électriques au charbon possédant une teneur en activateur alcalin d'au moins 3 % en poids avec de l'eau de manière à obtenir un matériau présentant la consistance de la terre humide et on l'applique, après compaction, Proctor, en une épaisseur d'une valeur minimale de 0,3 m.

2. Procédé suivant la revendication 1, caractérisé en ce qu'à titre d'activateur alcalin, on utilise du ciment portland, de l'hydroxyde de calcium, de l'oxyde de calcium ou des mélanges de ces produits.

3. Procédé suivant la revendication 1, caractérisé en ce que l'on utilise un dérivé de cendre volante pulvérulent, sec, provenant de cendre volante contenant de l'oxyde de calcium, avec une teneur en hydroxyde de calcium d'au moins 4 % en poids.

4. Procédé suivant l'une des revendications 1 à 3, caractérisé en ce que l'on ajoute des agents d'étanchéité et/ou de fluidité au mélange.